# EUROPEAN PATENT APPLICATION

(11) **EP 1 520 641 A1**
(43) Date of publication of application: **06.04.2005**
(21) Application number: 04023288.6
(22) Date of filing: 30.09.2004
(51) Int. Cl.: B21D 55/00, B30B 15/28, F16P 3/04

(54) **Safety device for sheet bending presses**

(30) Priority: 03.10.2003 IT PR20030087
(71) Applicant: Schiavi Macchine Industriali S.p.A., 29027 Podenzano (Piacenza) (IT)
(72) Inventor: Mondani, Filippo c/o Schiavi Macchine Ind. S.P.A., 29027 Podenzano (Piacenza) (IT); Casolari, Gianpaolo c/o Schiavi Macch. Ind. S.P.A, 29027 Podenzano (Piacenza) (IT)
(74) Representative: Guareschi, Antonella

(57) **Abstract**

The invention refers to the field of bending presses and more precisely refers to a safety device that is able to avoid breaking the tools due to a wrong choice by the operator. The device comprises two transponders (2) and (4) respectively installed on the press punch and on the press matrix die and carrying data or codes related to compatible tools. A reading receiver member transmits data to PCI that compares them and transmits or not a command at the press start depending on compared data.

## Description

The present invention refers to a safety device for sheet bending presses.

As known, sheet bending presses are equipped with two tools, a punch supported through known means by an upper table that can translate on a vertical plane and a matrix die supported by a lower table that is fixed and coplanar with the upper table sliding plane.

The tools, matrix die and punch, must be chosen depending on the type of working and therefore the bending angle that has to be realised on the sheet.

With a certain punch shape, a certain matrix die shape must be installed, namely, briefly, matrix die and punch constitute a pair of tools that must always be complied with in order not to break one or both tools, such breaking being able to generate serious accidents for the operators responsible for controlling the press.

Currently, the choice of tools is left to the operator that must verify, on matrix die and punch, the correspondence of two codes.

The correct installation safety is therefore left to the operator's diligence without any chance of an automatic check by the machine.

Object of the present invention is automatically inhibiting the press operation in case of an installation error of one of the two tools, namely the installation of two mutually incompatible tools.

A further object is inhibiting the press operation in case of a wrong tool choice that, though being mutually compatible, are not suitable for performing a certain bending angle.

These objects have all been reached by the safety device for sheet bending presses, subject of the present invention, that is characterised in what is included in the enclosed claims and in particular in that it provides: two transponders respectively installed on the matrix die and on the punch, each one of which transponders is adapted to transmit identification data associated with the two tools to a receiving member for reading said data; an electronic circuit connected to the receiving member for mutually comparing said data and for inhibiting the operation of the press-controlling circuit in case said data are not mutually compatible, the comparison being provided before starting to use the press.

This and other characteristics will be better pointed out by the following description of some embodiments shown, merely as a non-limiting example, in the enclosed tables of drawing in which:

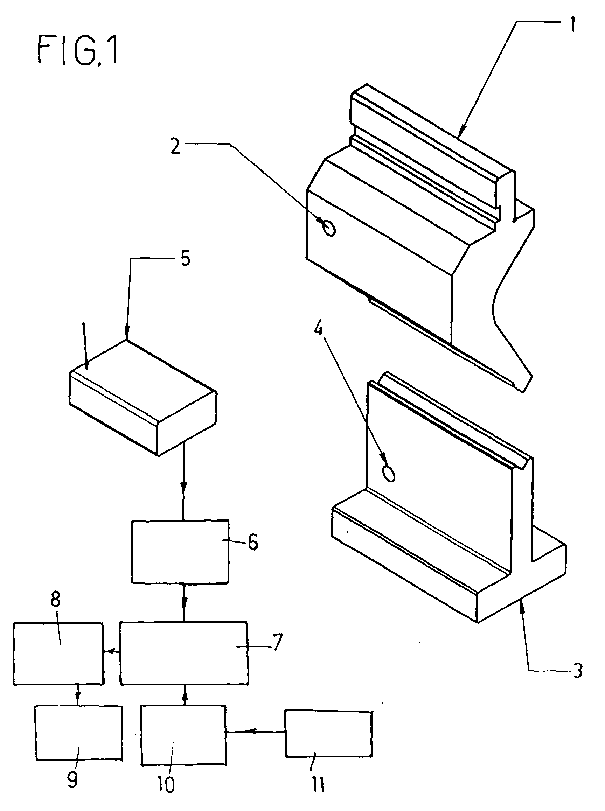

- figure 1 shows a block diagram of the safety device.

With reference to the figure, 1 designates a punch on which a transponder 2 has been inserted.

3 designates a matrix on which a transponder 4 has been inserted.

The two transponders 2 and 4 transmit data to a reading receiving member 5 that, through its own antenna and a decoding 6 transmits data to a PCI 7 that performs the comparison of data coming from the transponder 2 with data detected by the transponder 4; if compared data are compatible, this means that the choice of the two tools is correct so that the PCI can give the consent to the pressing operation start.

In case the two signals do not coincide, a locking system 8 will be activated in order to inhibit the electric supply to the machine and activate an acoustic or visual alarm signalling device 9.

Since the two tools are at a certain distance and the reading receiving member is placed on the fixed machine chassis, it can be advantageous to install two receiving members, one for each transponder and both connected to the PCI 7.

It can be advantageous to provide a memory 10 for data related to tools with which the machine is equipped depending on the bending angle so that, through a keyboard 11, data can be inserted that are related to bending and to material and thickness, so that the computer can provide indications whether the choice of the pair of tools signalled by the transponders is correct.

The reading member can be moving, namely manually carried by an operator that, before starting the pressing operation, reads the two transponders.

If the operator forgets to perform the pass of the moving reading member, no consent will be given to the pressing cycle start.

Till the working type will have to be changed, no new reading will be performed since the read data are stored and kept; only when one or both tools are changed, their codes will have to be identified in order to verify their compatibility.

## Claims

1. Safety device for a sheet bending press in which two tools are provided, a punch and a matrix die, **characterised in that** it comprises: two transponders (2) and (4) respectively housed on the punch and the matrix die and having identification codes; at least one receiving member (5) for reading the signals issued by the two transponders; a computer for comparing the signals issued by the two transponders that, in case of compatibility between the two codes, allows starting the press operating cycle.

2. Safety device for a sheet bending press according to claim 1, **characterised in that** it comprises a memory in which data are inserted that are related to tools depending on the bending angle.

3. Safety device for a sheet bending press according to claim 1, **characterised in that** the reading receiving member (5) is secured to the press chassis.

4. Safety device for a sheet bending press according to claim 1, **characterised in that** the receiving member equipped with an antenna is manually carried by an operator.
